Europäisches Patentamt

(19) European Patent Office

Office européen des brevets

(11) Publication number: **0 258 254 B1**

(12) # EUROPEAN PATENT SPECIFICATION

(45) Date of publication of patent specification:
15.05.91 Bulletin 91/20

(51) Int. Cl.⁵: **F16B 39/22**, F16B 21/20

(21) Application number: 86903686.3

(22) Date of filing: 06.06.86

(86) International application number:
PCT/SE86/00266

(87) International publication number:
WO 86/07419 18.12.86 Gazette 86/27

(54) LOCKING DEVICE SUCH AS A LOCK WASHER; SECURING PLATE AND THE LIKE.

(30) Priority: 07.06.85 SE 8502813

(43) Date of publication of application:
09.03.88 Bulletin 88/10

(45) Publication of the grant of the patent:
15.05.91 Bulletin 91/20

(84) Designated Contracting States:
AT BE CH DE FR GB IT LI

(56) References cited:
DE-A- 2 201 918
DE-C- 314 707

(56) References cited:
DE-C- 314 708
GB-A- 512 231
US-A- 1 419 564
US-A- 1 486 347

(73) Proprietor: BURSTRÖM, Bertil
Boarp 790
S-262 00 Ängelholm (SE)

(72) Inventor: BURSTRÖM, Bertil
Boarp 790
S-262 00 Ängelholm (SE)

(74) Representative: Berglund, Gustav Arthur et al
AWAPATENT AB Box 5117
S-200 71 Malmö (SE)

## Description

The present invention relates to an assembly including locking device of the same type as lock washers, clamping sleeves and anchoring plugs, for arresting, locking and securing against undesirable positional displacement, twisting or rotation in screw and bolt joints, no-slip and mechanical joints etc. within, for example machine-building, caused by vibration or shaking or the effects of other external forces.

With screw joints and no-slip joints there is usually the primary requirement that there is built in to the joint a high resistance to displacement or loosening of its components, especially in connection with stresses from vibrations or static and dynamic forces. A large number of methods and constructions have been developed for this purpose. There is, however, no device which is highly effective in its locking function and, at the same time, rational, reliable and inexpensive in both its manufacture and its handling. The optimum locking device should thus be easy and cheap to manufacture with conventional equipment and known techniques, and should, in view of costs, be made from a single piece. Further, it should, at least when in the form of a lock washer, be reversible without losing its function, and also be unaffected by its environment and handling. In addition, the locking device should not require any special adaptation with regard to adjacent components, for example, a certain surface structure or the like. Finally, the locking device should, in most cases, be easy to dismount and also allow repeated use.

The present invention, the purpose of which is to fulfil the requirements stated above for the ideal locking device, has for this purpose produced an assembly with characteristics as given in the patent claims.

A locking device of the type which is defined in the preamble of claim 1 is known from US-A-1 486 347. This document discloses a locking washer which is a development of a locking device described in US-A-1 419 564 and which comprises locking teeth adapted to be slightly distorted from a twisted position, that is, sprung down approximately to an original flat position, when a nut is screwed tightly down upon a work piece. When the tightened nut is subjected to vibration, the diagonally opposite upper and lower gripping edges of the teeth grip into and become slightly embedded in the faces of the nut and the work pieces.

The function of this known locking device entirely relies on the gripping edges of the locking teeth penetrating into the surfaces of the machine elements. By such penetration, a non-friction-dependent connection is achieved between the gripping edges and corresponding surfaces. In the event of a tendency of displacement, this mechanical connection gives rise to shearing forces parallel to the main plane of the device.

This principle, which is found in many known locking devices, however suffers from serious drawbacks. In particular, it does not provide any absolutely reliable locking effect. Since the locking principle depends on the gripping edge of the locking tooth penetrating into the surface of the machine elements, this surface must not be too hard, which limits the field of use of the locking washer. This in turn means that if said shearing forces become excessive, the machine element surfaces will be subjected to "peeling" as the gripping edges slide along them. Also, the machine elements will be damaged in connection with mounting. Thus, a locking device operating according to this locking principle does not give a satisfactory locking function. Another drawback inherent in this known locking principle is that it is necessary in connection with mounting or adaptation, to apply a specific minimum clamping force for obtaining said mechanical engagement.

The locking assembly according to the present invention uses a substantially different locking principle. The inventive locking principle can be explained by the following formula :

$$\text{tg } \alpha < \text{tg } \varphi + K \cdot M$$

where :

α = the angle of inclination of a line between cooperating gripping edges in relation to a normal to the main plane of the body,

= the angle of static friction at the points of engagement of the gripping edges (tgφ = coefficient of static friction μ),

K = a constant, and

M = an initial moment acting on the locking dog and caused by the resilient connection of the locking dog to the body.

The claimed invention substantially resides in the insight that if the above-mentioned relation is maintained, sliding movement between the gripping edges and the surfaces of the machine elements will be counteracted solely by the frictional forces appearing at the gripping edges. Thus, it should be emphasised that, as opposed to the locking washer in e.g. US 1 486 347 the present invention does not require the locking dogs to penetrate into the surfaces of the machine elements to achieve the aimed-at locking action.

In case of a tendency of displacement, the locking dog will be turned about its instantanous centre so as to provide a self-locking effect, since the frictional forces increase in proportion to the tendency of displacement.

Therefore, the invention suggests an assembly including a locking device of the type described in US 1 486 347 which, for maintaining the relation indicating above, further comprises stops or distancers with which the surfaces of the machine elements should be

brought into engagement in connection with mounting, and which distancers have such a height transversely of the main surfaces of the body that, in connection with mounting, said angle of inclination ($\alpha$) is prevented from exceeding a predetermined maximum value (tg $\varphi$ + K · M).

As to the design of the distancers claims 2 and 3 state two variants. According the a first variant (claim 2), that part of the body which is located between the locking dogs and holds them together also forms said distancers, the main surfaces of the body forming extended abutment surfaces for the machine element surfaces.

According to a second variant (claim 3), the distancers form part of the locking dogs. This variant can be achieved, for instance, if the cross-section of the locking dogs is given the form of a rectangle whose long side is larger than the thickness of the body and whose one diagonal, defining a line recited in claim 1 between the gripping edges, is substantially normal to the main surfaces of the body prior to mounting. In connection with mounting, the rectangle is turned to a position in which its short sides engage the surfaces of the machine elements in a planar fashion and in which further turning of the rectangle in the same direction is prevented in that gripping edges of the rectangle, which are interlinked by the other diagonal of the rectangle, engage the surfaces of the machine elements.

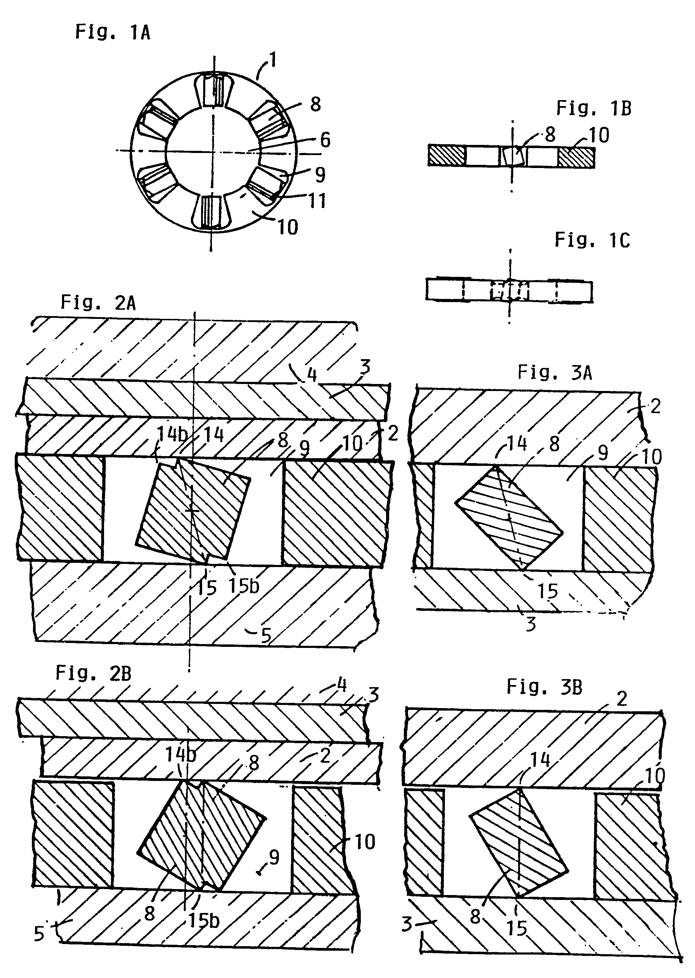

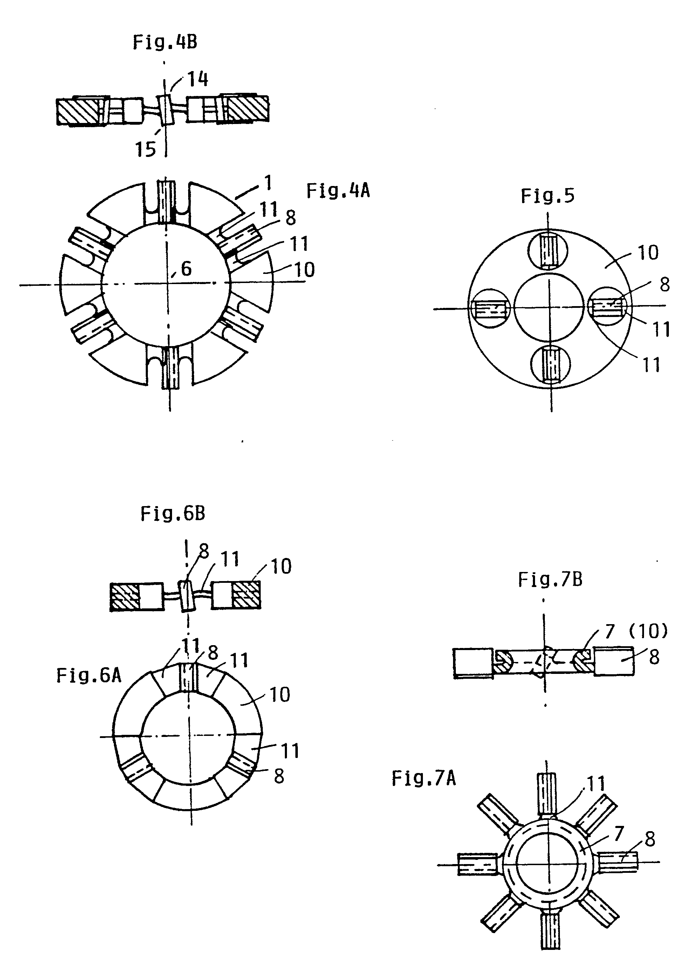

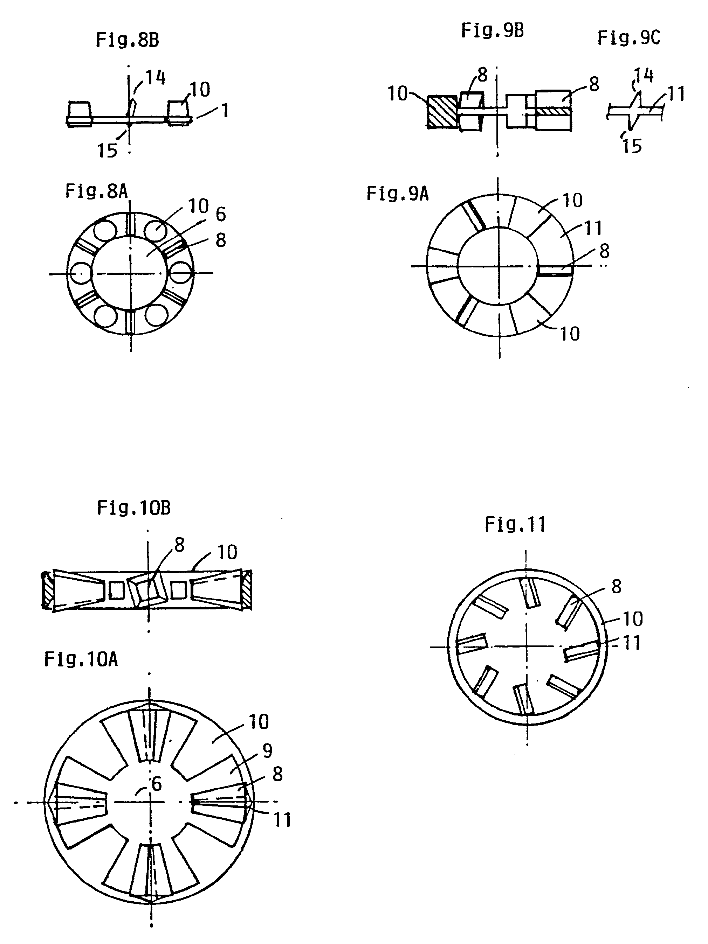

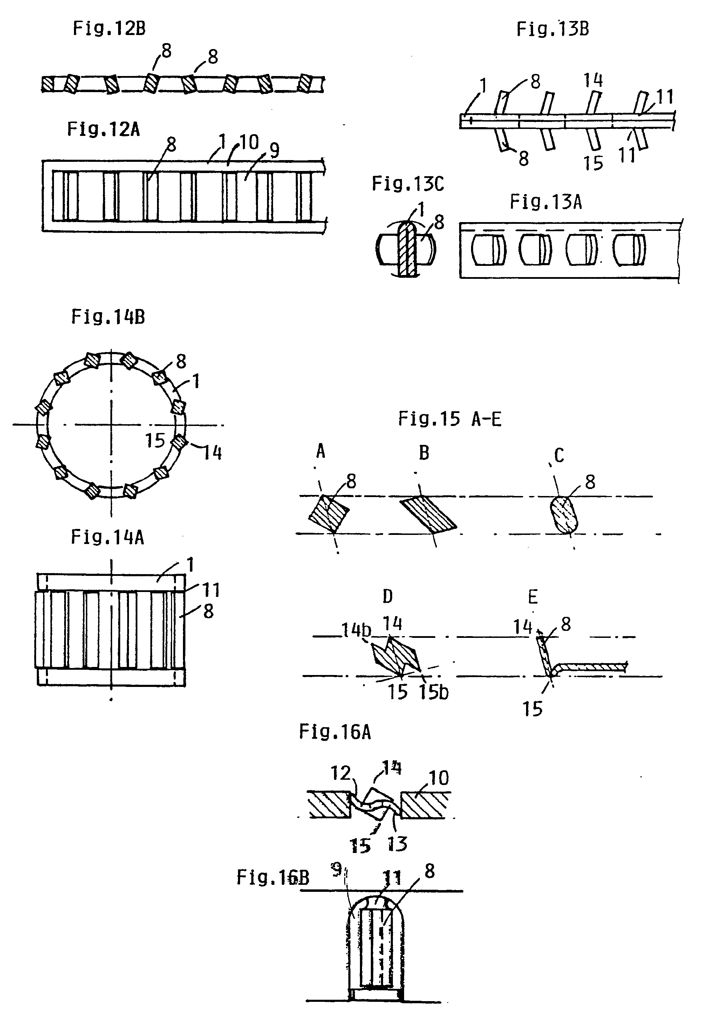

Several design examples of the invention are described below with reference to the appended drawings, Figs. 1-16. Fig. 1a is a plan view of a locking device of an inventive locking assembly, in the form of a concentric lock washer, which is also shown in cross section and side elevation in Figs. 1b and 1c respectively. Figs. 2a and 3a are sections of two variants of the locking mechanism itself after clamping between adjacent components, while Figs. 2b and 3b show the locking or arresting mechanism of the lock washer when fully engaged Figs. 4a and 4b, Fig. 5, Figs. 6a and 6b, Figs. 7a, 7b, 8a and 8b and Figs. 9a-c all show alternative designs of an arresting and locking washer. Figs. 10a and 10b show a lock washer with conical bearing surfaces while Fig. 11 shows a lock washer with oblique locking dogs. Figs. 12a and 12b and 13a-c show two straight variants of the locking device. Figs. 14a and 14b illustrate a sleeve-shaped locking device based on the concept of the invention. Figs. 15a-e show some alternative cross sections of the locking dogs. Finally, Figs. 16a and 16b illustrate a springing and clamping mechanism, directly connected to the locking device.

In each drawing, 1 indicates a locking device in its entirety. 2 and 3 (Figs. 2 and 3) are extraneous, attached components or adjacent walls, for example, two metal plates. 4 signifies a screw or bolt head, while 5 is the associated nut. The locking device 1 is, when applied as a lock washer, a round or angular, holed and substantially flat washer, but can also be a rectangular profile or strip (Figs. 12, 13), or consist of a sleeve (Fig. 14) with a locking function upon an axis and mounted hub.

A method of production for the locking device can be a shearing and pressing operation from a temperable metal sheet, but it may also be manufactured by, for example, plastic working, cutting or powder pressing.

The cavity or centre hole 6, for an axel or bolt with head 4, through a lock washer 1 may be punched and, where required, edged with a rolled up ferrule or collar 7 (Fig.7), which is compressed to a chosen thickness. Upon the forced compression of the collar 7 during mounting, the inner diameter of the centre hole 6 will be reduced to a certain degree, which results in the clamping of the lock washer to the axis or bolt shank. Radially out from the centre hole 6 or collar 7, a number of tabs, staves or locking dogs or teeth 8 have been freed from the body of the lock washer by pressing, cutting or punching so that there are spaces 9 between each dog 8 and the circumferentially adjacent members of the lock washer 10, which form distancers 10. The locking dogs 8 are twisted in a suitable direction and to a suitable degree about or against their fastening points, which thus form joints 11 and can be stamped and formed directly out of the base material or metal sheet. The length, breadth, thickness, shape, pretensioning and angle of twist of the locking dogs are determined with regard to the size, thickness and intended use of the lock washer. Similarly, the number and type of distancers 10 and locking dogs 8 is chosen with regard to the other dimensions, purpose and functional environment of the lock washer. In order to increase the pretensioning of and to guide the locking dogs 8, then these may be cut, stamped or arranged so that spring tongues 12 and 13 (Figs. 16a & b) are formed, which press against the distancers 10 or against each other if there are no distancers. The locking dogs 8 are angular in section so that they have diagonally opposite gripping edges 14,15.

When the lock washer is clamped between elements 2 and 3 or components 4 and 5, the screwing effect turns the locking dogs 8 to a predetermined position, which is determined by the height or thickness of the distancers 10 or by the distance of the bearing surfaces from each other. The diagonally opposite gripping edges 14 and 15 of the locking dogs 8 are then level with or flush with the facing bearing surfaces and/or both principal planes of the lock washer 1, the major part of the bearing pressure then being distributed along the distancers 10. By a suitable design of the joints 11, locking dogs 8 and spring tongues (where included) 12, 13 (Fig.16a) and by the choice of a lock washer material with a certain springiness, then a certain edge or gripping pressure is obtained upon the gripping edges 14, 15 of the locking dogs, in engagement with the contact surfaces of the assembled components. Should a tendency to counter-rotation or displacement occur in the lock washer itself or in any of the adjacent components 2, 3, 4, 5 in relation to the others, then each locking dog will turn to a corresponding degree. Because of the movement geometry and set angle of friction of the locking dogs, the engagement with the gripping edges will increase and thereby the pressure or force on each component, on the screw thread or on the joint in general, and in this way, a no-slip, self-arresting effect is obtained. Further rotation or displacement in relation to adjacent components will consequently be prevented. Safe and reliable functioning is achieved if the frictional drag of the edges 14, 15 of the locking dogs and the initial springing effect of their joints 11 and the spring tongues 12, 13 exceed the counter-directed force components which strive to prevent the turning of the locking dogs. The required frictional drag for this turning will be sufficient if the shape and degree of turn of the locking dogs at the starting point form an angle of inclination of the diagonal line between the bearing or gripping edges of the locking dog which is less than the angle of friction of the materials engaged.

A further modification of the lock washer is shown in Figs. 10a and 10b, where the locking dogs vary in height or thickness outwards from the centre hole 6 and towards the periphery. This, however, requires a corresponding conical form of the contact surface of adjacent components, such as a screw head or nut. This configuration has been chosen so that the locking dogs, when turning, attain the correct speed at every point along their gripping edges with no partial sliding or lag. Fig. 11 shows a variant of the lock washer where the locking dogs' extension inwards from the uniting outer ring is not strictly radial but slanted, so that attempts at unscrewing cause the inner ends of the locking dogs to swing inwards towards the centre, and thereby contribute to locking the screw axis.

Figs. 12a and 12b, and 13a-c show two further designs of the locking device where a washer, a plate, a straight profile or strip with the above described functions has been formed from a punched and pressed strip of suitable straightness and shape. To achieve a double-acting effect, in one of the designs (Figs.12a, 12b) each alternate locking dog has been turned so as to acquire an opposite locking direction. In the other design (Figs. 13a-c), the sheet material has been bent double so that the locking dogs 8 occur in opposed pairs, thereby achieving some economic advantages in manufacture.

Figs. 14a and 14b show a locking device designed as a sleeve or hub, with the locking dogs 8 arranged axially. In other designs the locking dogs may be arranged at other angles, for example, transverse to the axis. By action upon one end of the sleeve, or by the turning of an axis or hub, the locking dogs will be forced to assume a locking position determined by play, frictional drag, shape, force and other factors.

Many modifications can otherwise be conceived where the particular locking function in accordance with the invention is made use of within the framework of the concept of the invention. Thus, for example, the cross sectional shape of the locking dogs does not necessarily need to be angular or edged at all, but could, to advantage, be partially circular, elliptical or eccentric. There is a further variant in which the locking dogs in accordance with the invention – instead of being flexibly joined directly in the base material – are baked in soft rubber or plastic between the contact surfaces or mantle in general.

It can be advantageous to limit the movement of the locking dogs, either by a stop on the dog itself (Fig. 15d) or by a lip adjacent to it, in that position where the gripping edges 14, 15 are at their most extreme or highest points and where they are fully loaded and at maximum penetration of the adjacent material, i.e. where shear resistance and frictional drag are at their most developed. It is also an advantage if the movement geometry of the locking dogs is such that they attain a high degree of lift. One method of achieving this is to arrange two gripping edges, one after the other, on either side of the fulcrum point or rotation centre (Figs. 2a-b, Fig. 15d). The first pair of gripping edges to engage, 14, 15, turn the dog further to a first maximum position, after which the next pair of gripping edges 14b, 15b, which in this position have attained a sufficient frictional drag and purchase, then aid a continued turning and thereby increase the thickness or height of the locking device. An increased locking height function and extended range of use can be achieved by doubling up two locking devices as in Figs. 13a-c. The invention can, in this way, also be applied to anchoring devices in drilled holes or slots in rock strata etc.

## Claims

1. Assembly of a locking device (1) and machine or building elements for preventing relative displacement between said elements, said locking device comprising a flat or sleeve-shaped body and locking dogs (8) in the form of tabs, staves or dogs which are formed from said body from the same base material and which are so freed from the body at least partially throughout its thickness as to be pivotably and resiliently joined to the rest of the body, said locking dogs (8) having gripping edges (14, 15) which before mounting the locking device (1) project over two main surfaces of the body and which are intended to be brought into engagement with adjoining surfaces of said elements, such that the locking dogs in the event of e.g. a tendency of displacement due to vibrations, are turned to provide a locking and separating effect on said surfaces of said elements, the locking device further comprising stops or distancers with which the surfaces of the elements are intended to be brought into engagement in connection with mounting, and which distancers have such a height transversely of said main surfaces of said body that in connection with mounting, the angle of inclination between a line interlinking cooperating gripping edges (14, 15), and a line normal to said main surfaces of the body, is prevented from exceeding a predetermined maximum value **characterised** in that said maximum value is in such a relationship to the angle of static friction of the materials used and to the pretensioning-conditioned initial compressive forces of the gripping edges exerted on said surfaces of said elements that in the event of such a tendency of displacement, sliding movement between said gripping edges and said surfaces of the elements is counteracted solely by frictional forces appearing at the gripping edges.

2. Assembly as claimed in claim 1, **characterised** in that the distancers (8) form part of the body between the locking dogs, said main surfaces of the body forming engagement surfaces of the distancers, and said gripping edges of the locking dogs being caused in connection with mounting to coincide with planes through said engagement surfaces.

3. Assembly as claimed in claim 1, **characterised** in that the distancers form part of the locking dogs (8).

4. Assembly as claimed in any one of claims 1-3, **characterised** in that the locking dogs (8) are connected to the body via spring tongues (12, 13) having a turning effect and/or orientating function on the locking dogs.

5. Assembly as claimed in any one of claims 1-4, **characterised** in that the locking dogs (8) are provided, in addition to the first-mentioned gripping edges (14, 15), with extra gripping edges (14b, 15b) which are so designed that they will come into effect for producing a locking action when said first-mentioned gripping edges (14, 15) approach or are in their most extreme or highest locking position during the locking process.

6. Assembly as claimed in any one of claims 1-5, **characterised** in that the locking dogs (8) are provided with edges, shoulders or strips (14b, 15b) adapted to limit the turning movement of the locking dogs (8) during the locking process so that the gripping edges (14, 15) are arrested in their most extreme or highest position.

**Ansprüche**

1. Zusammenbau einer Sicherungsvorrichtung (1) und Maschinen- oder Bauelemente zum Verhindern von Relativbewegung zwischen den Elementen, wobei die Sicherungsvorrichtung einen flachen oder hülsenförmigen Körper und Sperrzähne (8) in Form von Lappen, Stäben oder Ansätzen umfasst, welche aus dem genannten Körper aus demselben Ausgangsmaterial geformt und vom Körper zumindest teilweise dessen Dicke hindurch derart freigelegt sind, dass sie mit dem Rest des Körpers drehbar und federnd verbunden sind, wobei die Sperrzähne (8) Greifkanten (14, 15) aufweisen, welche vor dem Montieren der Sicherungsvorrichtung (1) über zwei Hauptflächen des Körpers hinausragen und mit benachbarten Flächen der genannten Elemente eingreifen, so dass beispielsweise im Falle einer durch Schwingungen verursachten Tendenz zur Verschiebung die Sperrzähne gedreht werden, um eine schliessende und trennende Wirkung auf die genannten Flächen der Elemente hervorzurufen, wobei die Sicherungsvorrichtung ferner Anschläge oder Abstandsstücke umfasst, mit denen die Flächen der Elemente beim Montieren eingreifen, und die eine solche Höhe quer zu den Hauptflächen des genannten Körpers haben, dass beim Montieren der Neigungswinkel zwischen einer zusammenwirkende Greifkanten (14, 15) miteinander verbindenden Linie und einer zu den genannten Hauptflächen des Körpers senkrechten Linie verhindert ist, einen vorbestimmten Höchstwert zu überschreiten, dadurch **gekennzeichnet**, dass der genannte Höchstwert in einem solchen Verhältnis zum Haftreibungswinkel der verwendeten Werkstoffe und zu den vorspannungsgeregelten Anfangs-Druckkräften, die die Greifkanten auf die genannten Flächen der Elemente ausüben, steht, dass im Falle einer derartigen Tendenz zur Verschiebung eine Gleitbewegung zwischen den Greifkanten und den Flächen der Elemente nur von den an den Greifkanten auftretenden Reibungskräften entgegengewirkt wird.

2. Zusammenbau nach Anspruch 1, dadurch **gekennzeichnet**, dass die Abstandsstücke (8) einen Teil des Körpers zwischen den Sperrzähnen bilden, wobei die Hauptflächen des Körpers Berührungsflächen der Distanzstücke bilden, und die Greifkanten der Sperrzähne beim Montieren mit sich durch die Berührungsflächen erstreckenden Ebenen zusammentreffen.

3. Zusammenbau nach Anspruch 1, dadurch **gekennzeichnet**, dass die Distanzstücke einen Teil der Sperrzähne (8) bilden.

4. Zusammenbau nach einem der Ansprüche 1-3, dadurch **gekennzeichnet**, dass die Sperrzähne (8) mit dem Körper über Federzungen (12, 13) verbunden sind, welche eine Drehwirkung und/oder eine orientierende Wirkung auf die Sperrzähne haben.

5. Zusammenbau nach einem der Ansprüche 1-4, dadurch **gekennzeichnet**, dass die Sperrzähne (8) nebst den erstgenannten Greifkanten (14, 15) mit zusätzlichen Greifkanten (14b, 15b) versehen sind, welche derart ausgeführt sind, dass sie in Funktion treten werden, um eine Schliesswirkung zu erzeugen, wenn sich die erstgenannten Greifkanten (14, 15) ihrer äussersten oder höchsten Schliessstellung im Schliessvorgang nähern oder sich in dieser Stellung befinden.

6. Zusammenbau nach einem der Ansprüche 1-5, dadurch **gekennzeichnet**, dass die Sperrzähne (8) mit Schneiden, Absätzen oder Leisten (14b, 15b) versehen sind, die die Drehbewegung der Sperrzähne (8) im Schliessvorgang begrenzen, so dass die Greifkanten (14, 15) in ihrer äussersten oder höchsten Stellung gesperrt sind.

## Revendications

1. Ensemble comprenant un dispositif (1) de blocage et des éléments de machine ou de construction, destiné à empêcher le déplacement relatif de ces éléments, le dispositif de blocage comprenant un corps plat ou en forme de manchon, et des taquets (8) de blocage sous forme de patins, d'échelons ou de taquets qui sont formés à partir du corps dans le même matériau de base et qui sont libres par rapport au corps au moins partiellement dans la direction de l'épaisseur, afin qu'ils soient raccordés élastiquement au reste du corps sous forme articulée, les taquets de blocage (8) ayant des bords de serrage (14, 15) qui, avant montage du dispositif de blocage (1), dépassent des deux faces principales du corps et qui sont destinés à être mis en contact avec des surfaces adjacentes des éléments, de manière que les taquets de blocage, par exemple à la suite d'une tendance au déplacement sous l'action de vibrations, tournent en donnant un effet de blocage et de séparation des surface des éléments, le dispositif de blocage comportant en outre des organes d'arrêt ou d'entretoise avec lesquels les surfaces des éléments sont destinées à être en contact lors du montage, les organes d'entretoise ayant, transversalement aux surfaces principales du corps, une hauteur telle que, en position de montage, l'angle d'inclinaison d'une droite reliant les bords coopérant de serrage (14, 15) par rapport à une droite perpendiculaire aux faces principales du corps ne peut pas dépasser une valeur maximale prédéterminée, caractérisé en ce que la valeur maximale présente, avec l'angle de frottement statique des matériaux utilisés et avec les forces initiales de compression dues à la mise sous tension préalable des bords de serrage, ces forces étant appliquées aux surfaces des éléments, une relation telle que, dans le cas d'une telle tendance au déplacement, le mouvement de glissement des bords de serrage et des surfaces des éléments est contrarié uniquement par les forces de frottement créées au niveau des bords de serrage.

2. Ensemble selon la revendication 1, caractérisé en ce que les organes d'entretoise (8) font partie du corps et sont placés entre les taquets de blocage, les faces principales du corps formant des surfaces de coopération des organes d'entretoise et les bords de serrage des taquets de blocage coincidant avec des plans passant par des surfaces de coopération, lors du montage.

3. Ensemble selon la revendication 1, caractérisé en ce que les organes d'entretoise font partie des taquets de blocage (8).

4. Ensemble selon l'une quelconque des revendications 1 à 3, caractérisé en ce que les taquets de blocage (8) sont raccordés au corps par des languettes élastiques (12, 13) ayant un effet de rotation et/ou une fonction d'orientation sur les taquets de blocage.

5. Ensemble selon l'une quelconque des revendications 1 à 4, caractérisé en ce que les taquets de blocage (8) ont, en plus des premiers bords de serrage (14, 15), des bords supplémentaires de serrage (14b, 15b) qui sont réalisés afin qu'ils entrent en action et donnent un effet de blocage lorsque les premiers bords de serrage (14, 15) se rapprochent de la position la plus haute ou extrême de blocage ou se trouvent dans cette position pendant l'opération de blocage.

6. Ensemble selon l'une quelconque des revendications 1 à 5, caractérisé en ce que les taquets de blocage (8) ont des bords, des épaulements ou des bandes (14b, 15b) destinés à limiter le mouvement de rotation des taquets de blocage (8) pendant l'opération de blocage afin que les bords de serrage (14, 15) soient arrêtés dans leur position la plus haute ou extrême.

Fig. 1A

Fig. 1B

Fig. 1C

Fig. 2A

Fig. 3A

Fig. 2B

Fig. 3B

Fig.4B

Fig.4A

Fig.5

Fig.6B

Fig.6A

Fig.7B

Fig.7A

Fig.8B

Fig.9B

Fig.9C

Fig.8A

Fig.9A

Fig.10B

Fig.11

Fig.10A

Fig.12B

Fig.12A

Fig.13B

Fig.13C

Fig.13A

Fig.14B

Fig.15 A-E

Fig.14A

Fig.16A

Fig.16B